# EUROPEAN PATENT SPECIFICATION

(11) **EP 3 914 187 B1**
(45) Date of publication and mention of the grant of the patent: **22.03.2023**
(21) Application number: 20700728.7
(22) Date of filing: 20.01.2020
(51) Int. Cl.: A61C 8/00, A61C 13/30

(54) **COUPLING ELEMENT FOR DENTISTRY APPLICATIONS AND CORRESPONDING KIT**
VERBINDUNGSELEMENT FÜR ZAHNÄRZTLICHE ANWENDUNGEN UND ENTSPRECHENDER BAUSATZ
ÉLÉMENT D'ACCOUPLEMENT POUR APPLICATIONS DENTAIRES ET KIT CORRESPONDANT

(30) Priority: 24.01.2019 IT 201900001043
(43) Date of publication of application: 01.12.2021
(73) Proprietor: Rhein 83 S.r.l., 40128 Bologna (BO) (IT)
(72) Inventor: STORNI, Gianni, 40065 Pianoro (IT)
(74) Representative: Modiano, Micaela Nadia
(86) International application number: PCT/EP2020/051280
(87) International publication number: WO 2020/152101

(56) References cited:
- EP-A1- 2 248 485
- WO-A1-2016/012581

## Description

The present invention relates to a coupling element for dentistry applications and to a corresponding kit.

In dentistry it is common practice to fix prosthesis which replicate one or more missing teeth to one or more pins inserted in a maxillary bone and rendered directly or indirectly integral therewith.

In greater detail, usually a threaded stem of each pin is inserted in a female thread formed in an implant, which is embedded in the maxillary bone and rendered integral therewith at the end of an osteointegration process. Sometimes, instead, it is the stem of said pin that is inserted in the surviving root of the original tooth and rendered integral therewith.

In both cases, the pin is kept protruding in the mouth with an enlarged head, to which the prosthesis has to be coupled.

The possibility is therefore known to insert one or more pins in the mouth of the patient, each designed to support a respective prosthetic tooth, and solutions are equally known in which multiple pins arranged along the same maxillary bone support together a single prosthesis, which replicates a whole dental arch or at least a portion of it.

In all these situations, the head of the pin can be inserted in a containment component, shaped like a hollow cylinder open at its ends, one of which is indeed designed to receive the head of the pin. More precisely, the coupling is provided by pressing the containment component against the pin, so as to force the insertion of the head of the latter in the open end of the component.

Thus, when the prosthesis has to replicate a single tooth it can be shaped around said component. If instead one wishes to replace a larger number of teeth, or a whole arch, a transverse bar is provided around a plurality of containment components previously coupled to respective pins (substantially parallel to the edge of the gum) and defines a sort of skeleton on which the prosthetic teeth are then shaped (in the reference technical field, the skeleton is also termed "skeleton bridge" or simply "bridge").

Especially in this last situation, sometimes an unpleasant drawback occurs.

In fact, correct coupling between the prosthesis (which incorporates the numerous containment components) and the pins occurs only when the pins are arranged mutually parallel, i.e., aligned with the ideal direction of insertion, which usually coincides with the perpendicular to the occlusal plane.

Vice versa, often various difficulties are encountered in arranging the various pins in this orientation (or it is necessary to adapt to existing structures and implants), and when indeed a misalignment occurs it is necessary to apply great pressure in order to insert the heads in the respective containment components, obtaining however a forced coupling that causes traumas and in any case produces the onset of stresses on said pins, which indeed because of the rigidity of the coupling deforms said pins an/or the elements of the prosthesis, with further unpleasant consequences. The stresses in fact can jeopardize the correct outcome of the procedure (and the premature loss of the pins or of the entire implant) and/or can be transmitted on the gums and on the other anatomical tissues of the patient, causing discomfort and pain to him.

EP2248485 A1 and WO2016012581 show some coupling elements for dentistry applications.

The aim of the present invention is to solve the problems described above, providing a coupling element and a kit that allow a coupling that is stable and at the same time easy between one or more pins and a respective dental prosthesis.

Within this aim, an object of the invention is to provide a coupling element and a kit that ensure practical methods for installing a dental prosthesis, avoiding or at least reducing the unwanted stresses on the pins and pain or discomfort for the patient.

Another object of the invention is to provide a coupling element and a kit that ensure great versatility in use and high reliability in operation, also if the pins are not correctly aligned with each other.

Another object of the present invention is to provide a coupling element and a kit that use a technical and structural architecture that is alternative to that of solutions of the known type.

Another object of the invention is to provide a coupling element and a kit that can be obtained easily starting from commonly commercially available elements and materials.

Yet another object of the invention is to provide a coupling element and a kit that have low costs and are safe in use.

This aim and these and other objects which will become better apparent hereinafter are achieved by a coupling element according to claim 1 and by a coupling kit according to claim 5.

Further characteristics and advantages of the invention will become better apparent from the description of some preferred but not exclusive embodiments of the element and of the kit according to the invention, illustrated by way of non-limiting example in the accompanying drawings, wherein:
Figure 1 is a perspective view of a first embodiment of the coupling element according to the invention;
Figures 2 and 3 are respectively top and bottom views of the element of Figure 1;
Figure 4 is a sectional view of the element of Figure 1, taken along a longitudinal plane;
Figure 5 is a perspective view of a first embodiment of the kit according to the invention, which comprises the element of Figure 1 and a ring;
Figure 6 is a view of Figure 5, with the ring arranged in the element;
Figure 7 is a perspective view of a further component of the kit of Figure 5;
Figure 8 is a top view of the component of Figure 7;
Figure 9 is a sectional view of the component of Figure 7, taken along a longitudinal plane;
Figure 10 is a perspective view of a further component of the kit of Figure 5;
Figure 11 is a front elevation view of the component of Figure 10;
Figure 12 is a sectional view, taken along a longitudinal plane, of the use of a kit according to the invention, which comprises the components of the preceding figures, a pin and some further components;
Figure 13 is a highly enlarged-scale view of a detail of Figure 12;
Figure 14 is a front elevation view of a detail of one of the components of the kit of Figure 12;
Figure 15 is a first perspective view of a second embodiment of the coupling element according to the invention;
Figure 16 is a second perspective view of the element of Figure 15;
Figure 17 is a sectional view of the element of Figure 15, taken along a longitudinal plane;
Figure 18 is a sectional view, taken along a longitudinal plane, of the use of a second embodiment of the kit according to the invention, which comprises the element of Figure 15, a pin, a ring and some further components;
Figure 19 is a perspective view of the assembly of one of the components of the kit of Figure 18 on the element of Figure 15;
Figure 20 is a perspective view of the component that in Figure 19 is assembled on the coupling element;
Figure 21 is a top view of the component of Figure 20;
Figure 22 is a sectional view of the element of Figure 20, taken along a longitudinal plane;
Figure 23 is a perspective view of a component of the kit of Figure 18;
Figure 24 is a front elevation view of the component of Figure 23;
Figure 25 is a perspective view of a third embodiment of the coupling element according to the invention;
Figure 26 is a sectional view of the element of Figure 25, taken along a longitudinal plane;
Figure 27 is a sectional view, taken along a longitudinal plane, of a detail that shows the use of a third embodiment of the kit according to the invention, which comprises the element of Figure 25, a pin and some further components;
Figure 28 is a perspective view of a component that can be comprised in the kit according to the invention;
Figure 29 is a front elevation view of the component of Figure 28;
Figure 30 is a sectional view of Figure 29, taken along the plane XXX-XXX;
Figure 31 is a bottom view of the component of Figure 28.

With particular reference to the figures, the reference numeral 1 generally designates a coupling element for dentistry applications, with which, according to the methods that will be described in detail hereinafter, it is possible to obtain the coupling of a dental prosthesis (hereinafter also termed prosthetic structure) to a bone tissue. As will be seen, at the same time the element 1 facilitates the construction step of the prosthesis.

It should be specified right now that the present description and the protection herewith claimed relate not only to an element 1 (produced and/or sold for example individually), but also to a coupling kit 100, which comprises one or more elements 1 and can be marketed with other components (as will be explained better hereinafter).

The kit 100, too, evidently has the goal of providing the coupling between a dental prosthesis and a bone tissue (and/or of facilitating the construction of said prosthesis).

The bone tissue can belong to the maxillary bone or mandibular bone of a patient who, because of traumas or pathologies of various kinds, indeed needs to receive in its mouth a dental prosthesis. The prosthesis, which can be comprised in the kit 100 or be provided/supplied separately (and is not shown in the accompanying figures for the sake of simplicity), can be of any type: a simple dental crown, a denture, a dental bridge, etcetera, in order to replace one or more missing teeth, and can be of the fixed type or the movable type.

The coupling element 1 comprises therefore a tubular body 2, which forms an internal duct 3 that is open outward at respective ends 2a, 2b of said body 2.

A first end 2a forms a first inlet (preferably but not exclusively circular in shape), in order to be able to insert the head 101a of a pin 101 in the duct 3; said pin can be coupled in turn directly or indirectly to a maxillary bone tissue (so far, according to known methods).

In greater detail, it is specified that the element 1, as well as the kit 100 obviously, can be effectively used in the application of implantology techniques, with the pin 101 which in this case is inserted, with its preferably threaded stem 101b (and on the top of which the head 101a is provided), in a female thread defined in an implant or preliminary coupling element (even related to a previous procedure), in any case embedded in the maxillary bone (or in the surrounding anatomical tissues) and rendered integral therewith at the end of an osteointegration process.

Likewise, the element 1 and the kit 100 can be applied validly in the implementation of natural dentition techniques, in which at least part of the root of the tooth has survived in the mouth of the patient, and in this case the pin 101 (of the root type) is inserted indeed in the root of the lost tooth and rendered integral therewith.

It should be observed that in practice the element 1 is a sort of container designed to be incorporated in the prosthesis and indeed often the prosthesis is shaped around said element 1. More precisely, if the prosthesis has to replicate a single tooth it can be shaped directly around said element 1. If instead (in the preferred but not exclusive application of the invention) one wishes to replace a larger number of teeth, or a whole arch, a transverse bar is provided around a plurality of elements 1 to be coupled to respective pins 101 (substantially parallel to the edge of the gum) and defines a sort of skeleton (or "bridge skeleton" or "bridge") on which the prosthetic teeth are then shaped. During the construction of the prosthesis, therefore, the element 1 is used in order to obtain a correct reference for the prosthetic teeth and/or for the bridge skeleton; then, when the prosthesis has been completed, the coupling thereof to the pins 101 (which protrude in the mouth of the patient with their heads 101a) is provided indeed at the inlets (kept open outward) of the elements 1, incorporated into the prosthesis.

In all these cases, anyway, the coupling is provided by pressing the element 1 against the pin 101, so as to force the insertion of the head 101a in the first end 2a.

So far, in any case, the use of the element 1 (and of the kit 100 that comprises it) occurs according to known methods and thus there is no need to expand on this any further.

According to the invention, the first end 2a has a recess 4 which is provided along the edge of the first inlet and forms a guiding portion for the insertion of the head 101a of the pin 101.

In other words, the recess 4 is a sort of discontinuity in the profile of the inlet, which is obtained for example by removal of material, and widens the inlet locally and thus allows the easier insertion of the head 101a even when the duct 3 is inclined (more or less significantly) with respect to the pin 101.

The recess 4 can have the shape of a groove, of a slide, of an inclined plane, of an indentation, or others, as a function of the specific requirements.

By facilitating insertion, the stresses that could otherwise develop on the components involved, especially when two or more elements 1 incorporated in a same prosthesis must be coupled to respective pins 101, which are mutually inclined (not parallel), are reduced or even eliminated.

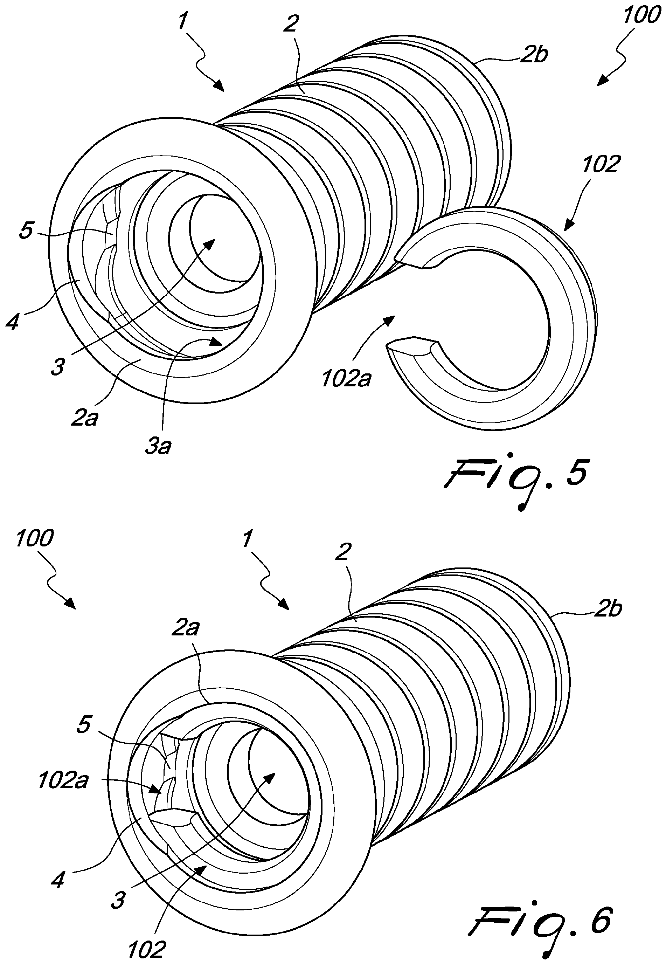

Moreover, according to the invention, along a segment 3a of the duct 3 which is contiguous to the first inlet, there is a protrusion 5 which is substantially aligned in a longitudinal direction with the recess 4 (the alignment is clearly visible for example in Figure 6). The protrusion 5 can thus contrast the accidental rotation of a ring 102, which is to be arranged in the segment 3a in order to lock the head 101a of the pin 101 and is provided with a respective discontinuity 102a (Figures 5-6), in which indeed the protrusion 5 is inserted.

In other words, first of all the ring 102 is placed in the duct 3, and in its segment 3a in particular (providing the configuration of Figure 5), carefully arranging the protrusion 5 in the discontinuity 102a (so as to prevent rotations of the ring 102 on a plane that is perpendicular to the extension of the duct 3). It is then possible to insert the head 101a of the pin 101 in the segment 3a, through the first inlet (which typically constitutes a constriction in cross-section with respect to the segment 3a) and using the recess 4 to facilitate said insertion. Thus, the ring 102 is interposed between the head 101a and the segment 3a (also by virtue of the possibility of elastic deformation ensured by the discontinuity 102a) and contrasts the accidental extraction of the head 101a.

Therefore, the combined action of the recess 4 and of the protrusion 5 allows to achieve already the intended aim, since they allow to provide a stable and at the same time easy coupling between one or more pins 101 and a respective dental prosthesis.

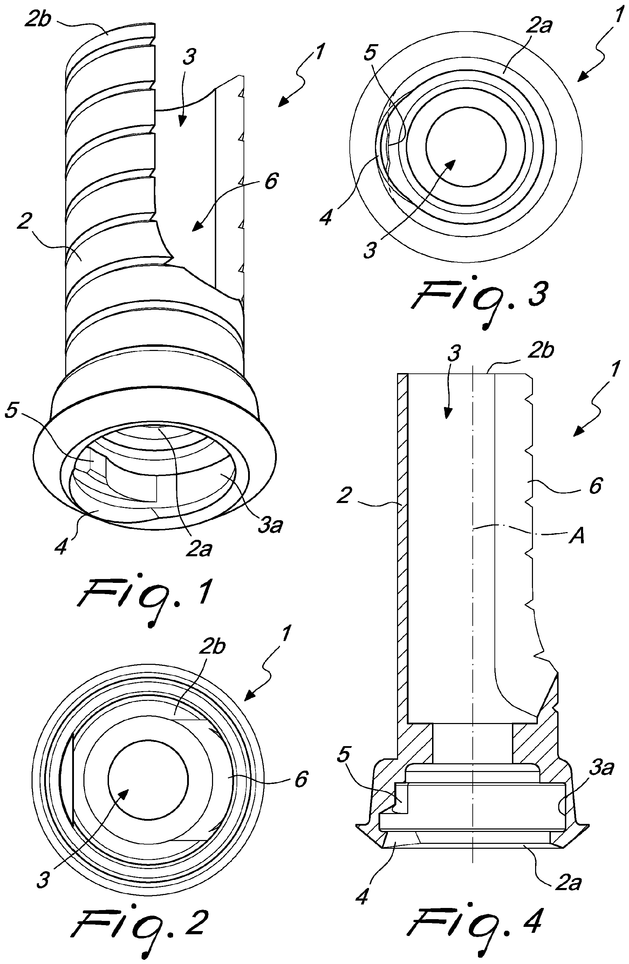

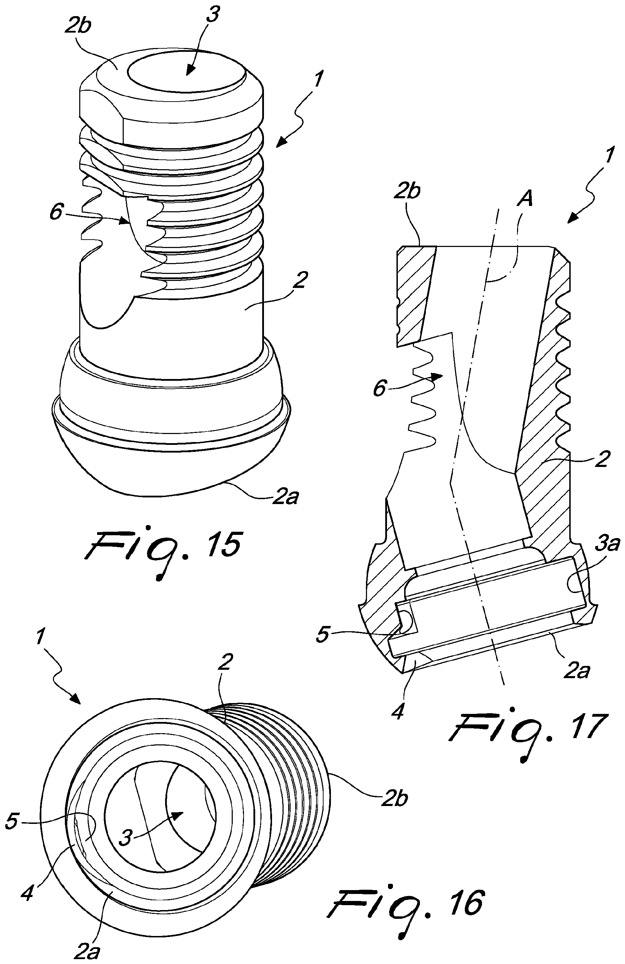

Usefully, the body 2 has a lateral window 6, which forms a further access to the duct 3 (and the purposes of which will be further clarified hereinafter). The window 6 can be provided along an intermediate section of the duct 3 and can be extended longitudinally for any length, without involving the ends 2a, 2b (as in the solution of Figures 15, for example) or ultimately affecting one of them (Figure 1, for example).

In a first embodiment of the invention (described by way of non-limiting example in Figures 1-4), the duct 3 has a longitudinal axis A (shown for the sake of simplicity only in Figure 4) which is substantially rectilinear and substantially perpendicular to the first inlet.

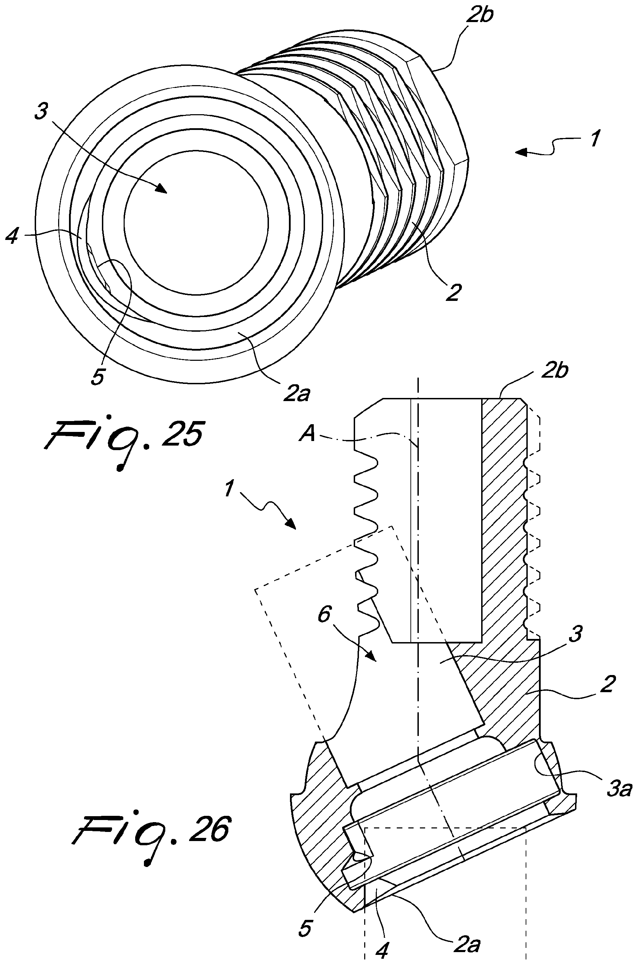

In a second embodiment of the invention (in which the elements 1 of Figures 15-17 and 25-26 are provided, for example), the duct 3 comprises a first substantially rectilinear portion (which contains the segment 3a), which is extended at right angles to the first inlet, and at least one second substantially rectilinear portion, which is inclined with respect to the first portion (and typically is extended at right angles to a second inlet, formed by the second end 2b of the body 2). In this case, the longitudinal axis A (shown for the sake of simplicity only in Figures 17 and 26) is a sort of open broken line.

It should be noted that the inclination between the first portion and the second portion may be any (Figures 15-17 and 25-26 simply show two examples in this regard), and indeed the possibility to choose at will the angle formed by the first portion and by the second portion, as well as the possibility to use rectilinear ducts 3, ensures maximum versatility to the invention.

In fact, for an equal position and inclination of the pin 101, as can be seen in the accompanying figures in the various proposed elements 1 the body 2 and the duct 3 have different inclinations, and this allows to choose in each instance the most suitable element 1, as a function indeed of the spatial configuration that the bodies 2 must assume in the mouth, of the prosthesis that is to be provided around them, and of the best insertion conditions that one wishes to obtain.

In the second embodiment of the invention introduced earlier (which does not exhaust the possibilities that are in any case within the protective scope claimed herein), conveniently the window 6 exactly faces the first portion (or, in other words, the first portion leads directly to the window 6, being interposed between said window and the first end 2a). The reasons for this choice are described in the pages that follow.

It is stressed, moreover, that the element 1 and particularly its body 2 can be completed with further solutions, in order to obtain other functionalities that are useful in specific contexts or applications.

For example, the body 2 can have lateral holes (provided in the thickness of the duct 3 and/or in lugs that protrude laterally from the substantially cylindrical extension of the body 2) in order to allow the insertion of reinforcement wires. These wires can in fact affect a plurality of bodies 2 distributed in the mouth of the patient, and allow indeed a stiffening of the prosthesis or of the bridge skeleton.

It is specified, moreover, that the edge of the first inlet and/or of the second inlet (opposite the first one, defined by the second end 2b as already seen) can be circular (but it is not excluded that it might assume other shapes), although it may be interrupted (not only by the recess 4) by the window 6, which as has been seen can reach and affect one of the ends 2a, 2b (Figures 1-4).

As already anticipated, like the element 1, a coupling kit 100 for dentistry applications is the subject matter of the present description, too (and of the protection claimed herein).

According to the invention, said kit 100 comprises first of all at least one coupling element 1, having the specifications described in the preceding pages, and thus, at least, one recess 4 provided along the edge of the first inlet and a protrusion 5 aligned with the recess 4 and arranged in the segment 3a that is contiguous to the first inlet.

Without abandoning the protective scope claimed herein, the kit 10 can be marketed with two or more elements 1, even of different shapes (in particular as regards the inclination of the body 2 and of the second inlet with respect to the first inlet), so as to allow the surgeon (or other person) to choose in each instance the one that best fits the mouth of the patient and the arrangement of the preexisting structures and/or of the other elements 1.

Furthermore, the kit 100 comprises at least one of a pin 101 and a ring 102: more precisely, the kit 100 can comprise one or more pins 101 (and no ring 102), one or more rings 102 (and no pin 101) or also the kit 100 can comprise both pins 101 and rings 102 (each in any number).

The pin 101 is provided with a stem 101b which can be inserted stably, directly or indirectly, in a maxillary bone tissue, and with an enlarged head 101a, which is shaped like the equatorial portion of a sphere and can be inserted in the duct 3 through the first inlet.

It should be noted that the particular choice of shaping the enlarged head 101a like the equatorial portion of a sphere is of undeniable practical interest: without jeopardizing in any way the ease of insertion in the element 1, the volume of the head 101a in the mouth is in fact small (with respect to known solutions in which the head is completely spherical) and this causes reduced discomfort and inconvenience to the patient when the prosthesis is not fitted (during construction, for example, or if it is removed during the night).

The ring 102 can be inserted, as already anticipated, in the segment 3a of the duct 3 to lock the head 101a of the pin 101; furthermore, the ring 102 is provided with a discontinuity 102a, designed to receive the protrusion 5 in order to contrast the accidental rotation of the ring 102.

The kit 100 can furthermore be provided with numerous other components, some of which will be introduced hereinafter: it should be specified right now that each of them may be comprised in the kit 100 in a number chosen at will, optionally also with different shapes and dimensions, in order to give maximum versatility to the invention.

Usefully, in this respect, therefore, the kit 100 can comprise first of all at least one fixing screw 103, which can be inserted in the duct 3 through the second inlet (or also through the window 6) to screw it into a respective threaded seat 101c, which can be provided in the head 101a of the pin 101.

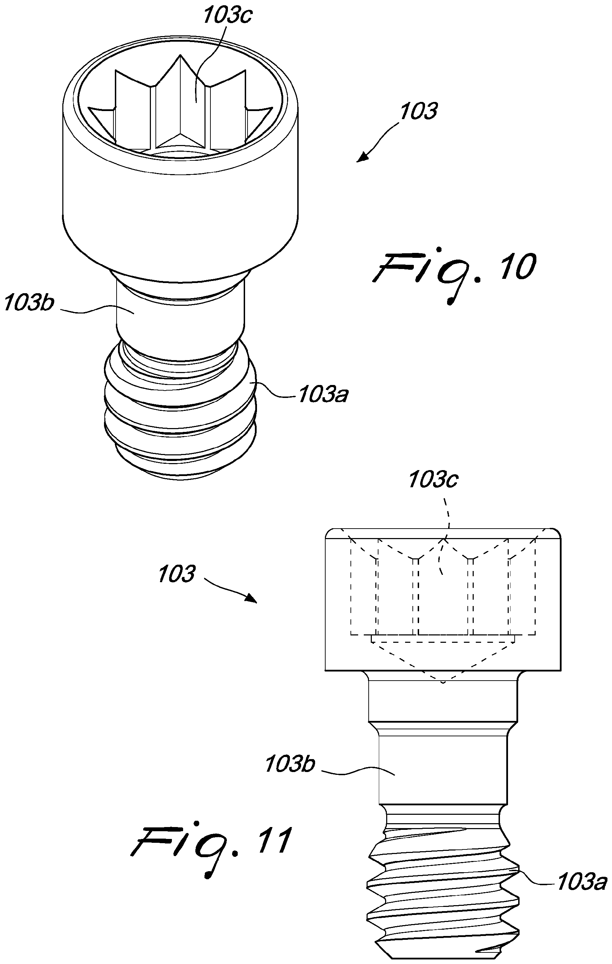

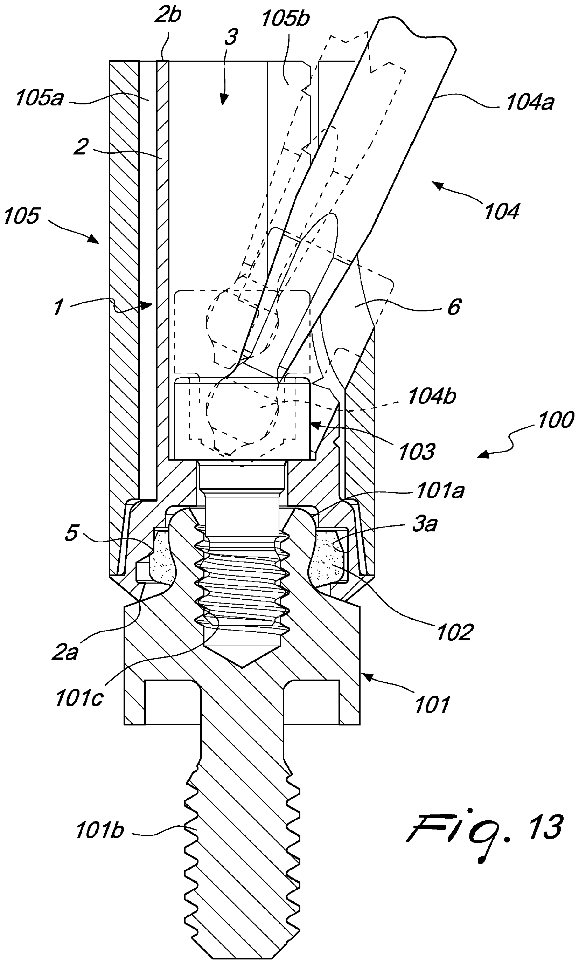

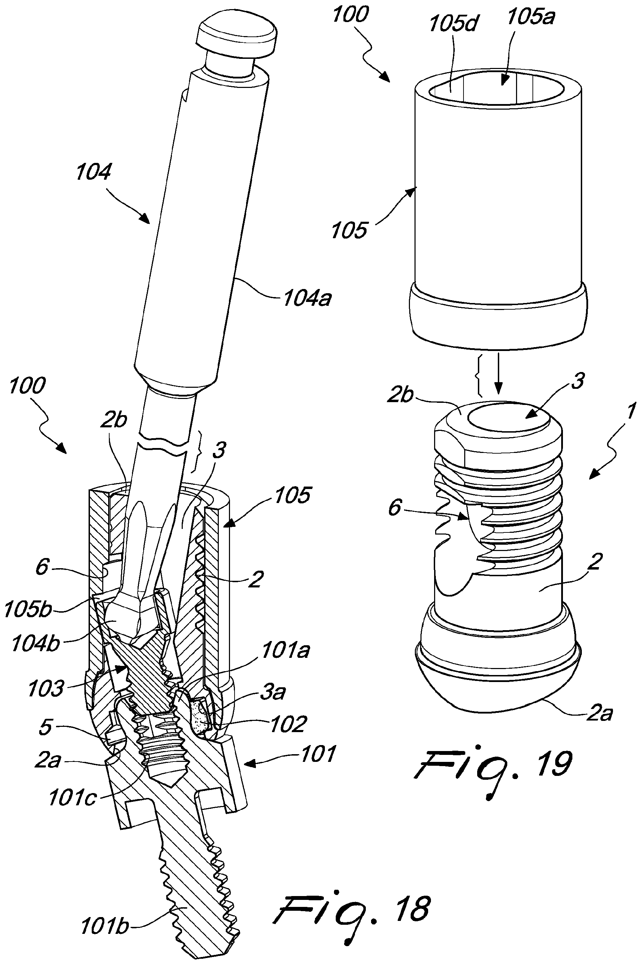

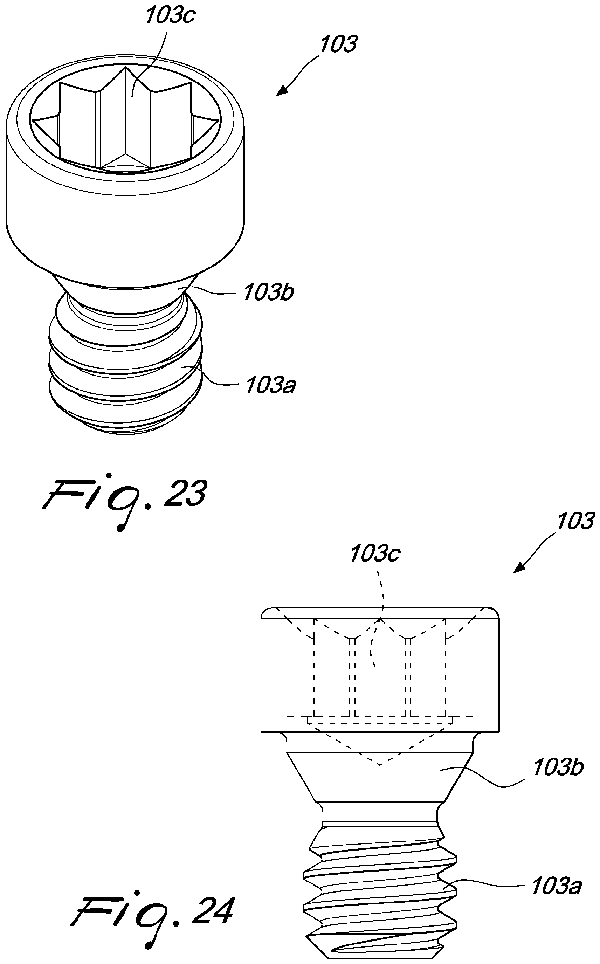

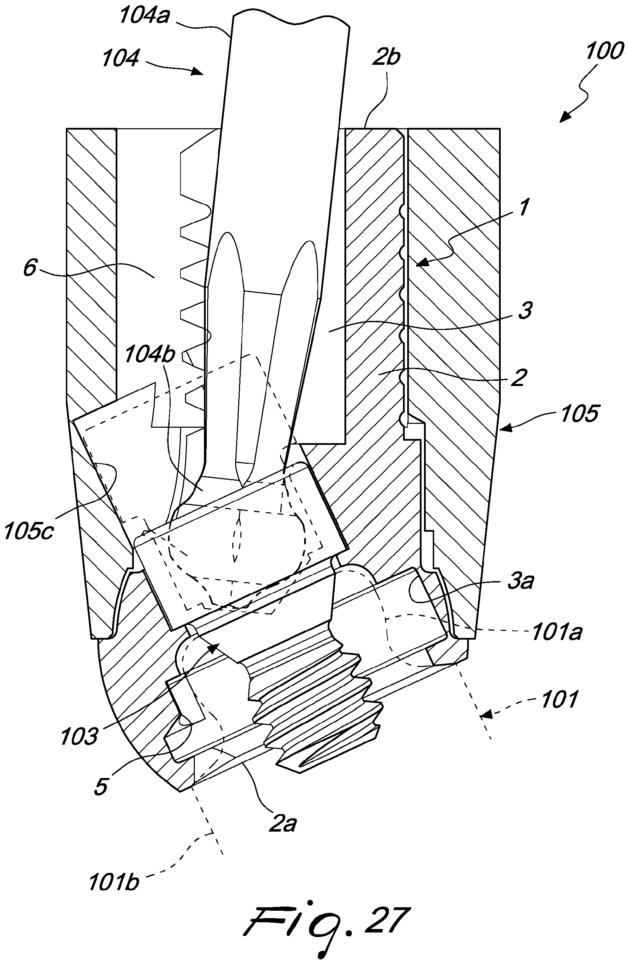

Figures 10-11 and 23-24 show two possible embodiments of the screw 103, which can be used selectively in relation to the type of selected element 1. In fact, the possibility is provided that the screw 103 might have, above the threaded stem 103a, a frustoconical base 103b (Figures 23-24) which facilitates correct insertion in the duct 3 and in the seat 101c when the longitudinal axis A is "broken" (element 1 of Figures 15 and 26, the insertion of the screw 103 is shown in Figures 18 and 27). Vice versa, when the screw 103 is to be inserted in a duct 3 with a rectilinear longitudinal axis A (element 1 of Figures 1-4) it is preferable to use a screw 103 with a cylindrical base 103b (even composed of multiple segments of different diameters, as in Figures 10-11; the respective insertion is shown in Figure 13).

Regardless of the shape, the screw 103 increases the stability of the coupling between the pin 101 and the element 1, avoiding the risk of accidental disengagement even in case of intense traumas or stresses. Likewise, the simple unscrewing of the screw 103 allows the voluntary extraction of the element 1 and of the prosthesis associated therewith (which occurs by applying a traction force of suitable intensity to the prosthesis), in case of maintenance, cleaning, or other requirements.

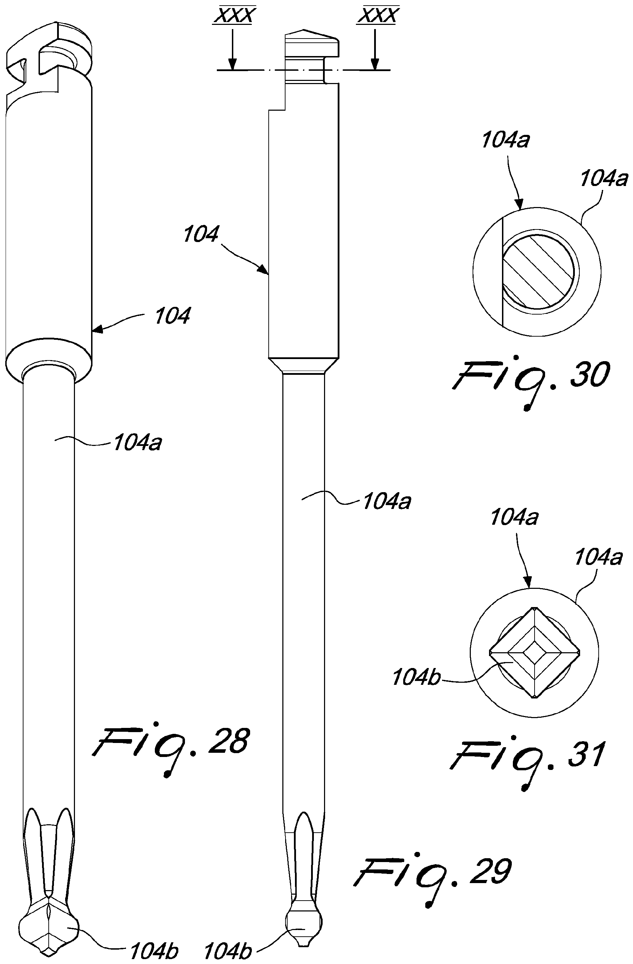

Indeed to proceed with the voluntary removal of the screw 103 (whilst not excluding other possibilities and tools to perform this activity), the kit 100 can comprise at least one tool 104 for the actuation of the screw 103 (Figures 28-31).

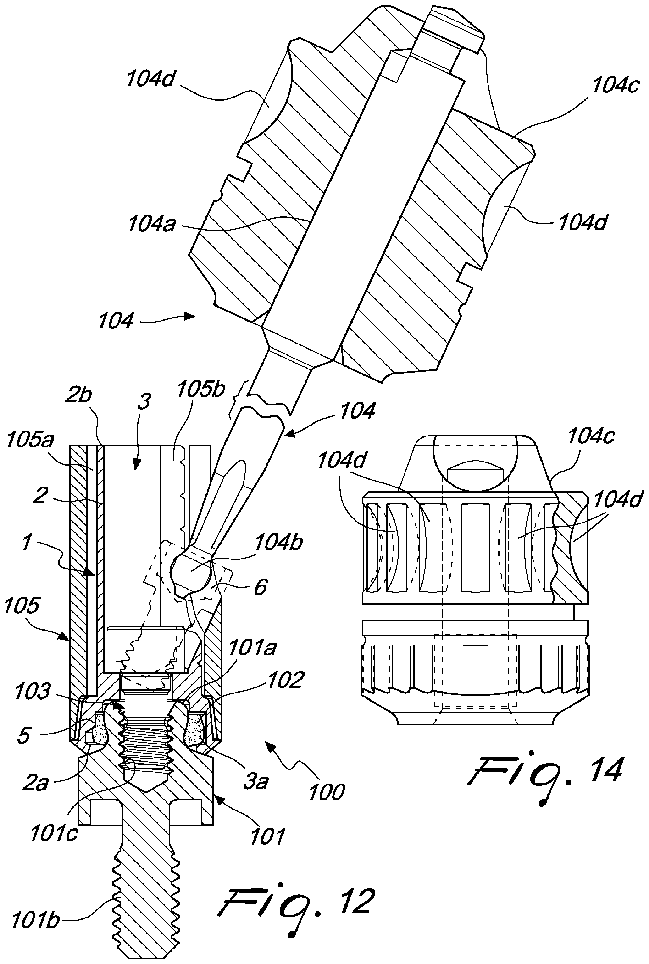

The tool 104 comprises a rod 104a which can be gripped (directly or indirectly) by an operator and can be inserted at the opposite end, with a terminal segment thereof, in the duct 3 (Figure 18), through the second inlet or, preferably, the window 6 (Figure 12). A contoured block 104b extends axially from said segment and can engage in a cavity 103c having an at least partially corresponding shape that is provided on the top of the screw 103, in order to actuate the screwing and/or unscrewing of the screw 103 by means of the rotation of the rod 104a. Indeed to allow the above cited use of the tool 104, the window 6, as pointed out in the previous pages, faces the first portion of the duct 3.

The choice of the access to be used may depend on various factors, and for example on the working conditions and on the surrounding structures, already present in the mouth of the patient, or more simply (using the window 6 as access) allows to give said patient a more aesthetically pleasing prosthesis. It should be noted in fact that the need to unscrew the screw 103 and disengage the element 1 arises also when said element is already incorporated in the prosthesis: it becomes therefore necessary to provide on the latter a hole that communicates in some way with the duct 3.

By being able to rely on the window 6, which is arranged laterally, it is possible to provide the hole on the part of the prosthesis that is directed toward the inside of the mouth (therefore not visible from the outside) instead of on the top or even on the external portion. Thus, during daily use of the prosthesis the smile of the patient is not spoiled by the presence of unsightly holes.

In particular, with reference to the solutions shown in the accompanying figures by way of non-limiting example of the application of the invention, the cavity 103c has a substantially star-shaped transverse cross-section and the block 104b is at least partially contoured substantially like a parallelepiped or preferably a cube with at least partially rounded faces.

These practical choices are of undeniable interest: by using for the cross-section of the cavity 103c a star with a number of points greater than the corners of the block 104b, mutual engagement between these components occurs also for different inclinations of the tool 104 with respect to the pin 101 (and therefore to the screw 103), ensuring in any case practical screwing and unscrewing methods in any condition of use.

Advantageously, the tool 104 can comprise a handle 104c (Figures 12 and 14) which is fitted on the rod 104a, preferably detachably. For example, the coupling between the handle 104c and the rod 104a can be of the interlocking or bayonet type, by providing suitable grooves along the latter which engage with respective portions of the former, or vice versa.

The external surface of the handle 104c is provided with a plurality of longitudinal slots 104d for optional coupling with a torque ratchet wrench (not shown in the figures but in any case of a per se known type), for screwing and unscrewing the screw 103 with greater precision and care.

Advantageously, the kit 100 according to the invention can also comprise a sleeve 105 for covering the coupling element 1.

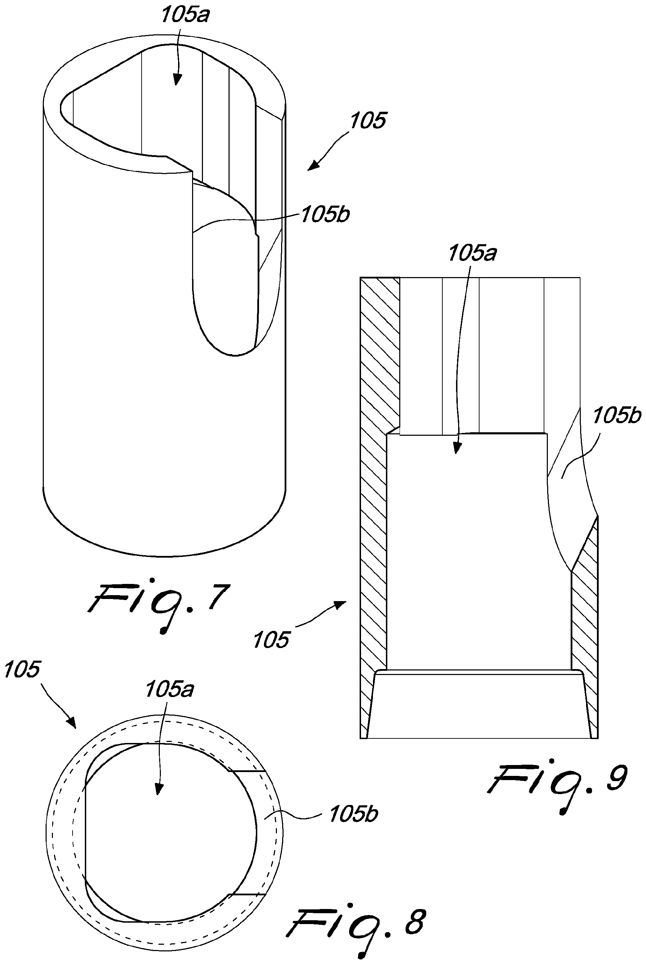

As can be deduced also from Figures 7-9 and 20-22, the sleeve 105 (preferably but not exclusively having a substantially cylindrical shape) forms a through internal channel 105a. Furthermore, indeed by virtue of the channel 105a the sleeve 105 can be fitted on the body 2 of the element 1, prior to the provision of the prosthesis, which is designed, as shown, to incorporate said coupling element 1.

Obviously, in order to allow suitable covering of the element 1, in each form used thereby, the sleeve 105 also can assume various shapes and have or not an orifice 105b (Figures 7-9) to be aligned with the window 6 of the corresponding element 1.

The sleeve 105 can be fitted on the element 1 before the latter is incorporated in the prosthetic structure (especially when the latter provides for a bridge skeleton on which various prosthetic teeth are shaped). In fact, if the structure is shaped around the elements 1 after previously inserting each body 2 in the internal channel 105a, it is then possible to melt the sleeve 105 (in this respect, preferably made of calcinable material or the like) and obtain substantially cylindrical passages in the structure in which the respective elements 1 can be inserted (making them adhere stably to the passages with adhesives or others).

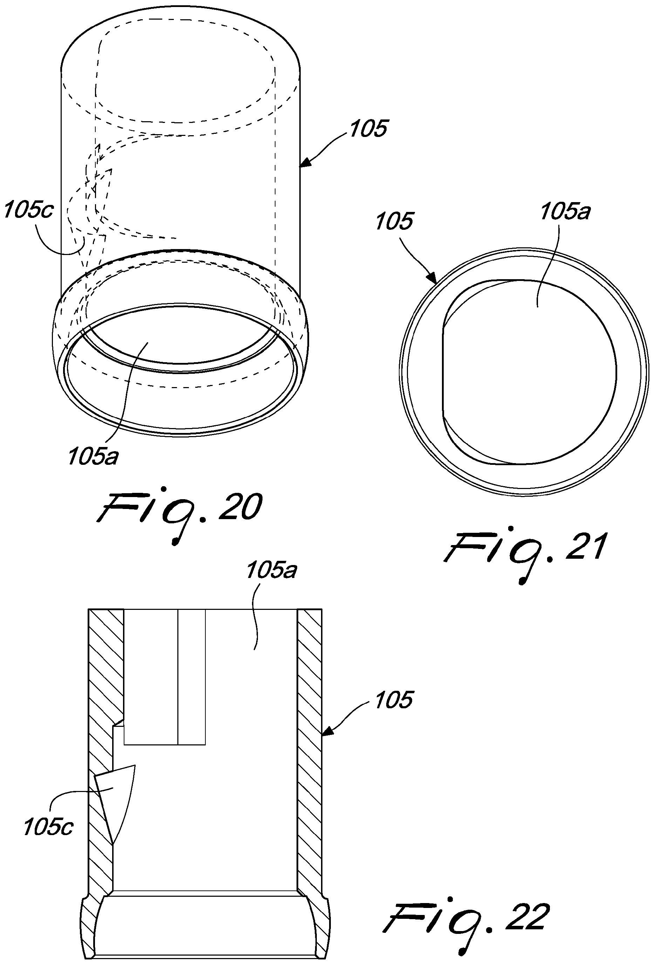

Usefully, the sleeve 105 has, along the channel 105a, a longitudinal incision 105c (Figures 20-21) which can be aligned with the window 6 of the body 2 of the coupling element 1. The incision 105c creates a local widening of the transverse cross-section of the channel 105a that facilitates the stroke of the screw 103 during its screwing and/or its unscrewing (as shown clearly for example in Figure 28).

It should be noted that along the wall of the channel 105a it is possible to provide a flattened region 105d that contrasts the accidental rotation of the sleeve 105 and can be aligned with the window 6.

The use of the element and of the kit according to the invention has been already described in practice in the previous pages.

In fact, they can be used (typically by a qualified user, such as a surgeon, a dentist, a dental technician, or the like) to facilitate the construction of a prosthetic structure (simulating one or more teeth) and thus to ensure an optimum coupling between the latter and the anatomical tissues of the patient (typically using implants already inserted in the mouth).

After the stem 101b of each pin 101 has been accommodated in the bone tissue, it is possible to couple to each head 101a the respective element 1, by pressing it against the head 101a and making it enter the duct 3 through the first inlet, to then be locked by the ring 102 and, subsequently, by the screw 103. By choosing the most suitable element 1, it is possible to make the bodies 2 distribute themselves in the mouth in the desired orientation, regardless of the direction of insertion and of the inclination assumed by the pins 101 in the mouth, which depend on the implants already installed and/or on the preexisting conditions of the surrounding tissues.

Furthermore, and especially, even in the presence of great mutual inclinations (between the pin 101 and the element 1) the recess 4 facilitates in any case an easy and nontraumatic insertion of the head 101a, since it forms a kind of guiding portion for the latter. The protrusion 5 ensures that in this step the ring 102 does not rotate in an unwanted manner and remains in the desired position, in which, once insertion of the head 101a has been completed, it stabilizes the coupling. The action of the ring 102 is in turn nontraumatic due to the possibility of elastic deformation ensured by the discontinuity 102a.

When the prosthetic structure incorporates two or more elements 1, which in the mouth of the patient must be clearly coupled to an equal number of pins 101, the particularities of the invention are enhanced. In fact, the pins 101 often are not mutually parallel as a consequence of errors during the operation for their application, or in any case their alignment does not coincide perfectly with the expected one and with respect to which the prosthetic structure has been built.

In such cases, if known solutions are used it is necessary to force the coupling in order to obtain the installation of the structure, and this causes pain to the patient, subjecting the surrounding tissues to an excessive and unnatural stress.

Vice versa, by using the element 1 and the kit 100 according to the invention, when the prosthetic structure is pushed against the gum, the insertion of the heads 101a is facilitated by the recesses 4 (as well as by the elastic deformation of the rings 102 made possible by the discontinuity 102a). This eliminates the danger of the onset of unwanted stresses and traumas for the patient.

This confirms that the coupling element and the kit 100 allow a stable and at the same time easy coupling between one or more pins 101 and a respective prosthetic structure for dentistry (even in conditions of lack of alignment between the pins 101) and eliminates or at least reduces the unwanted stresses on the pins 101 as well as pains or discomfort for the patient.

The subsequent stability of the coupling is ensured by the protrusion 5, which prevents unwanted rotations, and is further strengthened by the fixing screw 103. The latter can be maneuvered easily from outside by means of the tool 104, which can be introduced laterally in the duct 3 by virtue of the window 6.

In this respect, when one wishes to disassemble the prosthesis it is possible to unscrew each screw 103 by accessing it through a hole provided in the hidden part of the prosthetic structure (directed toward the inside of the mouth), and it has been found that the tool 104 can engage the cavity 103c even when it is extremely inclined. Subsequently, after the screws 103 have been removed, it is sufficient to apply a traction force such to as to overcome the coupling reaction of the ring 102 and extract the heads 101a from the inlets.

The activities for installing and removing the prosthesis are thus extremely practical and easy.

Likewise, the many configurations that can be obtained by using different shapes for the elements 1 and/or the other components of the kit 100 ensure maximum versatility of the invention.

Moreover, the benefits deriving, during the construction of the prosthesis, from the action of sleeves 105 to be fitted preliminary on the elements 1 have already been described.

## Claims

1. A coupling element for dentistry applications, comprising a tubular body (2) which forms an internal duct (3) that is open outward at respective ends (2a, 2b) of said body (2), a first said end (2a) forming a first inlet, for the insertion in said duct (3) of the head (101a) of a pin (101) which can be coupled directly or indirectly to a maxillary bone tissue, **characterized in that** said first end (2a) has a recess (4) which is provided along the edge of said first inlet and forms a guiding portion for the insertion of the head (101a) of the pin (101), along a segment (3a) of said duct (3) which is contiguous to said first inlet there being a protrusion (5) which is substantially aligned longitudinally with said recess (4), for contrasting the accidental rotation of a ring (102) provided with a respective discontinuity (102a), which can be arranged in said segment (3a) in order to lock the head (101a) of the pin (101).

2. The coupling element according to claim 1, **characterized in that** said body (2) is provided with a lateral window (6) for forming a further access to said duct (3).

3. The coupling element according to claim 1 or 2, **characterized in that** said duct (3) has a longitudinal axis which is substantially rectilinear and substantially perpendicular to said first inlet.

4. The coupling element according to claim 1 or 2, **characterized in that** said duct (3) comprises at least one first substantially rectilinear portion, which is extended at right angles to said first inlet, and at least one second substantially rectilinear portion, which is inclined with respect to said first portion.

5. A coupling kit for dentistry applications, **characterized in that** it comprises at least one coupling element (1) according to one or more of the preceding claims and at least one from:
- a pin (101) provided with a stem (101b) which can be inserted stably, directly or indirectly, in a maxillary bone tissue, and with an enlarged head (101a), which is shaped like the equatorial portion of a sphere and can be inserted in said duct (3) through said first inlet;
- a ring (102), which can be inserted in said portion (3a) of said duct (3) to lock the head (101a) of the pin (101) and is provided with a discontinuity (102a), designed to receive said protrusion (5) to contrast the accidental rotation of said ring (102).

6. The kit according to claim 5, **characterized in that** it comprises at least one fixing screw (103), which can be inserted in said duct (3) through said second inlet for its screwing into a respective seat (101c) which can be provided in said head (101a) of said pin (101).

7. The kit according to claim 6, **characterized in that** it comprises at least one tool (104) for the actuation of said screw (103), said tool (104) comprising a rod (104a) which can be gripped by an operator and can be inserted at the opposite end, with a terminal segment thereof, in said duct (3) through said second inlet or said window (6), a contoured block (104b) extending axially from said segment and being engageable in a cavity (103c) having an at least partially corresponding shape which is provided on the top of said screw (103), for actuation of the screwing and/or unscrewing of said screw (103) by means of the rotation of said rod (104a).

8. The kit according to claim 7, **characterized in that** said cavity (103c) has a substantially star-shaped transverse cross-section, said block (104b) being at least partially contoured substantially like a parallelepiped or preferably a cube with at least partially rounded faces.

9. The kit according to claim 7 or 8, **characterized in that** said tool (104) comprises a handle (104c) which is fitted on said rod (104a), preferably detachably, the outer surface of said handle (104c) being provided with a plurality of longitudinal slots (104d) for optional coupling with a torque ratchet wrench.

10. The kit according to one or more of claims 5-9, **characterized in that** it comprises a sleeve (105) for covering said coupling element (1), which forms a through internal channel (105a) and can be fitted on said body (2) prior to the provision of a dental prosthesis, designed to incorporate said at least one coupling element (1).

11. The kit according to claim 10, **characterized in that** said sleeve (105) has, along said channel (105a), a longitudinal incision (105c) which can be aligned with said window (6) of said body (2) of said coupling element (1), for the stroke of said screw (103) during its screwing and/or unscrewing.

## Patentansprüche

1. Ein Verbindungselement für zahnärztliche Anwendungen, das einen röhrenförmigen Körper (2) umfasst, der einen inneren Durchgang (3) bestimmt, welcher an jeweiligen Enden (2a, 2b) des Körpers (2) offen ist, wobei das erste Ende (2a) einen ersten Einlass zum Einsetzen des Kopfs (101a) eines Stifts (101) in den Durchgang (3) bildet, der direkt oder indirekt mit einem maxillären Knochengewebe verbunden werden kann; **dadurch gekennzeichnet, dass** das erste Ende (2a) eine Vertiefung (4) hat, die entlang der Kante des ersten Einlasses angebracht ist und einen Führungsabschnitt zum Einsetzen des Kopfes (101a) des Stifts (101) bildet; wobei sich entlang einem Segment (3a) des Durchgangs (3), das an den ersten Einlass angrenzt, ein Vorsprung (5) befindet, welcher in Längsrichtung im Wesentlichen mit der Vertiefung (4) ausgerichtet ist, um der zufälligen Drehung eines Rings (102) entgegenzuwirken, der mit einer entsprechenden Diskontinuität (102a) versehen ist und in dem Segment (3a) angeordnet werden kann, um den Kopf (101a) des Stifts (101) zu arretieren.

2. Das Verbindungselement gemäß Anspruch 1, **dadurch gekennzeichnet, dass** der Körper (2) mit einem seitlichen Fenster (6), um einen weiteren Zugang zu dem Durchgang (3) zu bilden, ausgestattet ist.

3. Das Verbindungselement gemäß Anspruch 1 oder 2, **dadurch gekennzeichnet, dass** der Durchgang (3) eine Längsachse hat, die im Wesentlichen geradlinig und im Wesentlichen senkrecht zu dem ersten Einlass ist.

4. Das Verbindungselement gemäß Anspruch 1 oder 2, **dadurch gekennzeichnet, dass** der Durchgang (3) mindestens einen ersten im Wesentlichen geradlinigen Abschnitt umfasst, welcher sich in rechten Winkeln zu dem ersten Einlass erstreckt, und mindestens einen zweiten im Wesentlichen geradlinigen Abschnitt, der im Verhältnis zu dem ersten Abschnitt schräg ist.

5. Ein Verbindungsbausatz für zahnärztliche Anwendungen, **dadurch gekennzeichnet, dass** er mindestens ein Verbindungselement (1) gemäß einem oder mehreren der obigen Ansprüche und mindestens eines von Folgendem umfasst:
- einem Stift (101), ausgestattet mit einem Schaft (101b), der, direkt oder indirekt, fest in ein maxilläres Knochengewebe eingesetzt werden kann, und mit einem vergrößerten Kopf (101a), welcher wie der äquatoriale Teil einer Kugel geformt ist und durch den ersten Einlass in den Durchgang (3) eingeführt werden kann;
- einem Ring (102), der in das Segment (3a) des Durchgangs (3) eingeführt werden kann, um den Kopf (101a) des Stifts (101) zu arretieren, und mit einer Diskontinuität (102a) versehen ist, die konstruiert ist, um den Vorsprung (5) aufzunehmen, um der zufälligen Drehung des Rings (102) entgegenzuwirken.

6. Der Bausatz gemäß Anspruch 5, **dadurch gekennzeichnet, dass** er mindestens eine Befestigungsschraube (103) umfasst, die durch den zweiten Einlass in den Durchgang (3) eingeführt werden kann, zum Einschrauben derselben in einen entsprechenden Sitz (101c), der in dem Kopf (101a) des Stifts (101) angebracht sein kann.

7. Der Bausatz gemäß Anspruch 6, **dadurch gekennzeichnet, dass** er mindestens ein Werkzeug (104) zum Drehen der Schraube (103) umfasst, wobei das Werkzeug (104) einen Schaft (104a) umfasst, der von einem Bediener ergriffen werden und mit einem Endsegment desselben am gegenüberliegenden Ende durch den zweiten Einlass oder das Fenster (6) in den Durchgang (3) eingeführt werden kann; wobei ein konturierter Block (104b) sich axial von dem Segment erstreckt und in eine Aushöhlung (103c) mit einer zumindest teilweise entsprechenden Form eingreifen kann, die am oberen Ende der Schraube (103) angebracht ist, zum Ein- und/oder Herausschrauben der Schraube (103) durch Drehung des Schafts (104a).

8. Der Bausatz gemäß Anspruch 7, **dadurch gekennzeichnet, dass** die Aushöhlung (103c) einen im Wesentlichen sternförmigen transversalen Querschnitt hat, wobei der Block (104b) zumindest teilweise im Wesentlichen wie ein Parallelepiped oder vorzugsweise ein Würfel mit zumindest teilweise gerundeten Seiten geformt ist.

9. Der Bausatz gemäß Anspruch 7 oder 8, **dadurch gekennzeichnet, dass** das Werkzeug (104) einen Griff (104c) umfasst, der, vorzugsweise abnehmbar, auf den Schaft (104a) aufgesetzt ist, wobei die Außenfläche des Griffs (104c) mit einer Vielzahl von Längsschlitzen (104d) zur fakultativen Kopplung mit einem Drehmoment-Radschlüssel ausgestattet ist.

10. Der Bausatz gemäß einem oder mehreren der Ansprüche 5-9, **dadurch gekennzeichnet, dass** er eine Hülse (105) zum Abdecken des Verbindungselements (1) umfasst, die einen inneren Durchgangskanal (105a) bildet und vor Anbringung einer Zahnprothese auf den Körper (2) aufgesetzt werden kann, konstruiert, um das mindestens eine Verbindungselement (1) aufzunehmen.

11. Der Bausatz gemäß Anspruch 10, **dadurch gekennzeichnet, dass** die Hülse (105) entlang dem Kanal (105a) einen länglichen Einschnitt (105c) hat, welcher mit dem Fenster (6) des Körpers (2) des Verbindungselements (1) ausgerichtet werden kann, für den Hub der Schraube (103) während ihres Ein- und/oder Herausschraubens.

## Revendications

1. Élément d'accouplement pour applications dentaires, comprenant un corps tubulaire (2) qui forme un conduit interne (3) qui est ouvert sur l'extérieur aux niveau des extrémités respectives (2a, 2b) dudit corps (2), une première dite extrémité (2a) formant une première entrée, pour l'insertion dans ledit conduit (3) de la tête (101a) d'une broche (101) qui peut être accouplée directement ou indirectement à un tissu osseux maxillaire, **caractérisé en ce que** ladite première extrémité (2a) comporte un évidement (4) qui est placé le long du bord de ladite première entrée et forme une partie de guidage pour l'insertion de la tête (101a) de la broche (101), le long d'un segment (3a) dudit conduit (3) qui est contigu à la dite première extrémité se trouve une saillie (5) qui est sensiblement alignée dans une direction longitudinale avec ledit évidement (4), pour contrebalancer la rotation accidentelle d'une bague (102) présentant une discontinuité respective (102a), qui peut être placée dans ledit segment (3a) afin de verrouiller la tête (101a) de la broche (101).

2. Élément d'accouplement selon la revendication 1, **caractérisé en ce que** ledit corps (2) est muni d'une fenêtre latérale (6) pour former un accès supplémentaire audit conduit (3).

3. Élément d'accouplement selon la revendication 1 ou 2, **caractérisé en ce que** ledit conduit (3) a un axe longitudinal qui est sensiblement rectiligne et sensiblement perpendiculaire à ladite première entrée.

4. Élément d'accouplement selon la revendication 1 ou 2, **caractérisé en ce que** ledit conduit (3) comprend au moins une première partie sensiblement rectiligne, qui s'étend à angles droits par rapport à ladite première entrée, et au moins une second partie sensiblement rectiligne, qui est inclinée par rapport à ladite première partie.

5. Kit d'accouplement pour applications dentaires, **caractérisé en ce qu'**il comprend au moins un élément d'accouplement (1) selon l'une ou plusieurs des revendications qui précèdent et au moins un élément parmi :
une broche (101) munie d'une tige (101b) qui peut être insérée de façon stable, directement ou indirectement, dans un tissu osseux maxillaire, et d'une tête élargie (101a), qui est formée comme la partie équatoriale d'une sphère et peut être insérée dans ledit conduit (3) à travers ladite première entrée ;
une bague (102), qui peut être insérée dans ladite partie (3a) dudit conduit (3) afin de verrouiller la tête (101a) de la broche (101) et qui est munie d'une discontinuité (102a), destinée à recevoir ladite saillie (5) pour contrebalancer la rotation accidentelle de ladite bague (102).

6. Kit selon la revendication 5, **caractérisé en ce qu'**il comprend au moins une vis de fixation (103), qui peut être insérée dans ledit conduit (3) à travers ladite seconde entrée pour se visser dans un logement respectif (101c) qui peut être prévu dans ladite tête (101a) de ladite broche (101).

7. Kit selon la revendication 6, **caractérisé en ce qu'**il comprend au moins un outil (104) pour l'actionnement de ladite vis (103), ledit outil (104) comprenant une barre (104a) qui peut être saisie par un opérateur et peut être insérée au niveau de l'extrémité opposée, par un segment terminal de celle-ci, dans ledit conduit (3) à travers ladite seconde entrée ou ladite fenêtre (6), un bloc profilé (104b) s'étendant axialement depuis ledit segment et pouvant venir en prise dans une cavité (103c) ayant une forme au moins partiellement correspondante, qui est prévue sur le dessus de la vis (103), pour procéder au vissage et/ou dévissage de ladite vis (103) par la rotation de ladite barre (104a).

8. Kit selon la revendication 7, **caractérisé en ce que** ladite cavité (103c) a une section transversale sensiblement en forme d'étoile, ledit bloc (104b) étant au moins partiellement profilé sensiblement comme un parallélépipède ou de préférence un cube avec des faces au moins partiellement arrondies.

9. Kit selon la revendication 7 ou 8, **caractérisé en ce que** ledit outil (104) comprend un manche (104c) qui est monté sur ladite barre (104a), de préférence de façon détachable, la surface extérieure dudit manche (104c) étant munie d'une pluralité de fentes longitudinales (104d) pour un éventuellement accouplement avec une clé à cliquet.

10. Kit selon l'une ou plusieurs des revendications 5-9, **caractérisé en ce qu'**il comprend un manchon (105) pour couvrir ledit élément d'accouplement (1), qui forme un canal interne traversant (105a) et peut être monté sur ledit corps (2) avant la mise en place d'une prothèse dentaire, conçue pour incorporer ledit au moins un élément d'accouplement (1).

11. Kit selon la revendication 10, **caractérisé en ce que** ledit manchon (105) a, le long dudit canal (105a), une incision longitudinale (105c) qui peut être alignée avec ladite fenêtre (6) dudit corps (2) dudit élément d'accouplement (1), pour la course de ladite vis (103) durant son vissage et/ou dévissage.
